# EUROPÄISCHE PATENTANMELDUNG

(11) **EP 1 582 822 A2**
(43) Veröffentlichungstag der Anmeldung: **05.10.2005**
(21) Anmeldenummer: 05005826.2
(22) Anmeldetag: 17.03.2005
(51) Int. Cl.: F24F 13/14

(54) **Regelklappe**

(30) Priorität: 30.03.2004 DE 202004005175 U
(71) Anmelder: Pluggit International N.V., Curaçao (AN)
(72) Erfinder: Georg Pfeiffer, 1092 La Conversion (CH); Marc Eppler, 72406 Biesingen (DE); Andreas Klemt, 81545 München (DE)
(74) Vertreter: KEIL & SCHAAFHAUSEN Patentanwälte

(57) **Zusammenfassung**

Es wird eine Regelklappe zur Steuerung der Durchflussmenge eines insbesondere gasförmigen Mediums durch ein Rohr (1), insbesondere für ein Luftführungssystem zur Zu- und/oder Abfuhr von Luft aus einem Gebäude beschrieben, mit einer Achse (5), an der zwei starr miteinander verbundene Regelklappenbereiche (6, 7) schwenkbar gelagert sind. Um eine Regelklappe, insbesondere für ein Luftführungssystem für Gebäude bereitzustellen, die sowohl in der geöffneten Stellung ("Auf") im Vergleich zu Kanalabzweigstutzen ohne Regelvorrichtung als auch in der geschlossenen Stellung ("Zu") sowie in allen Zwischenpositionen im Vergleich zu Kanalabzweigstutzen mit Regelvorrichtung eine deutliche Reduzierung des Strömungswiderstandes und der Geräuschentwicklung infolge eines geringeren Strömungswiderstands erzielt, ist es vorgesehen, dass die Regelklappenbereiche (6, 7) sich in zueinander unter einem spitzen Winkel (α) verlaufenden Ebenen erstrecken.

## Beschreibung

Die Erfindung betrifft eine Regelklappe zur Steuerung der Durchflussmenge eines bspw. gasförmigen Mediums durch ein Rohr, insbesondere für ein Luftführungssystem zur Zu- und/oder Abfuhr von Luft aus einem Gebäude, mit einer Achse, an der zwei starr miteinander verbundene Regelklappenbereiche schwenkbar gelagert sind.

Wohn- und Geschäftsgebäude werden derzeit in immer luftdichterer Bauweise erstellt, so dass der Austausch von verbrauchter Luft durch Frischluft abnimmt. Daher müssen zunehmend raumlufttechnische Anlagen eingesetzt werden, um den beispielsweise aus hygienischen Gründen erforderlichen Luftaustausch zu gewährleisten oder Schimmelpilzbildung zu vermeiden, die durch hohe, nicht abgeführte Luftfeuchtigkeit entstehen kann. Zudem werden durch derartige raumlufttechnische Anlagen Komfort- und Sicherheitsstandards, wie beispielsweise die Vermeidung von Geräuschbelastung und Einbruchsgefährdung bei geöffneten Fenstern, eingehalten.

Um eine ausreichende Durchlüftung, d. h. die Erfüllung der geforderten Gesamtraumluftaustauschrate, sowie eine möglichst gleichmäßige und nebenwirkungsarme Strömung, worunter insbesondere die Vermeidung von nicht oder unzureichend durchlüfteten Stellen und von zu hohen Luftgeschwindigkeiten und Strömungsgeräuschen verstanden wird, von Gebäuden zu erreichen, sind entsprechende Zu- und Abluftvorrichtungen bzw. -anlagen vorzusehen. Bei diesen werden üblicherweise eine raumindividuelle Zuluftführung mit einer zentralen Abluftführung (Absaugung) aus den sogenannten Feuchträumen, wie Küche, Bad, WC oder dgl., und den sogenannten Überströmbereichen bzw. zentralen Flächen, wie Flure, Gänge, Treppenhäuser, kombiniert.

Die Zu- oder Abluftführung erfolgt hierbei häufig über Sammel- oder Verteilerrohre mit Abzweigstutzen. In den Leitungen können zur Regelung der Abluftmengen auf die verschiedenen Ablufträume Abluftventile, üblicherweise Tellerventile, vorgesehen werden, bei denen der Luftströmungswiderstand und damit die Abluftmenge pro Zeiteinheit durch Auf- bzw. Zudrehen des Ventiltellers eingestellt werden kann. Die iterative Einregelung dieser meist dezentral angeordneten Ventile wird jedoch als aufwändig empfunden.

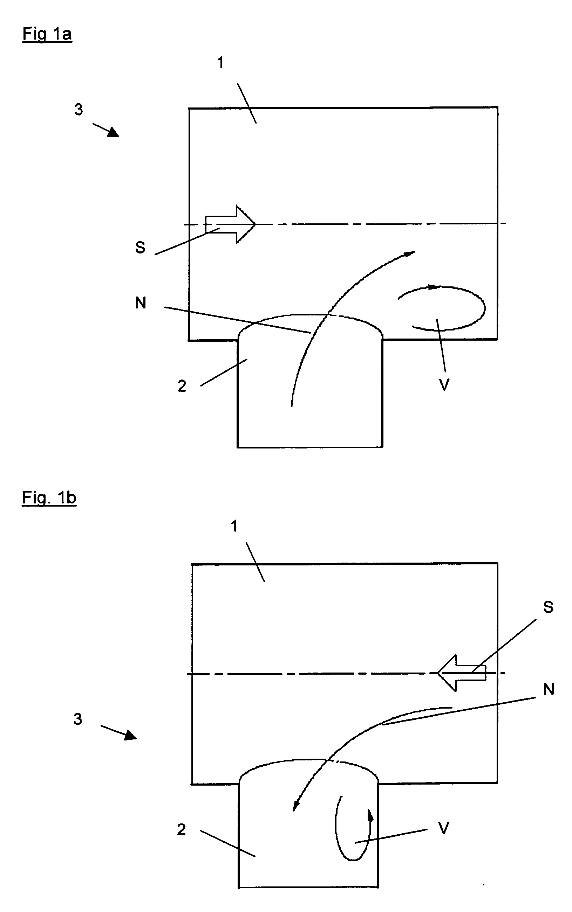

Wenn die Abluftventile dezentral angeordnet sind, ist es nicht erforderlich eine zusätzliche Regeleinrichtung in den Abzweigstutzen vorzusehen. Daher wird dort durch die Luftumlenkung ein erhöhter Strömungswiderstand erzeugt, der neben der Leistungsminderung bei der Luftabsaugung auch zu störenden Geräuschen führen kann. Diese Geräusche sowie ein vergleichsweise erhöhter Strömungswiderstand werden insbesondere auch durch die in den Figuren 1 a und 1b angedeuteten Verwirbelungen V hervorgerufen, die bei einer Luftströmung aus einem Rohr 1 in eine hiervon abzweigende Leitung 2 oder umgekehrt auftreten.

Aufgabe der vorliegenden Erfindung ist es daher, eine Regelklappe, insbesondere für ein Luftführungssystem für Gebäude bereitzustellen, die sowohl in der geöffneten Stellung ("Auf") im Vergleich zu Kanalabzweigstutzen ohne Regelvorrichtung als auch in der geschlossenen Stellung ("Zu") sowie in allen Zwischenpositionen im Vergleich zu Kanalabzweigstutzen mit Regelvorrichtung eine deutliche Reduzierung des Strömungswiderstandes und der Geräuschentwicklung infolge eines geringeren Strömungswiderstands erzielt.

Diese Aufgabe wird für eine Regelklappe der eingangs genannten Art erfindungsgemäß im Wesentlichen dadurch gelöst, dass die Regelklappenbereiche sich in zueinander unter einem spitzen Winkel laufenden Ebenen erstrecken.

Vorzugsweise ist die Regelklappe derart ausgebildet, dass der eine Regelklappenbereich gegenüber dem anderen Regelklappenbereich zwischen 15° und 75°, insbesondere etwa um 45° geneigt verläuft. Eine derartige Regelklappe verfügt über eine deutlich verbesserte Regelcharakteristik, so dass das Auftreten von Verwirbelungen wirkungsvoll vermieden werden kann. Durch die Gestaltung der Regelklappe mit zueinander unter einem spitzen Winkel verlaufenden Regelklappenbereichen kann die Regelklappe als eine Leitschaufel wirken, wodurch das Auftreten von unerwünschten Verwirbelungen weitgehend ausgeschlossen wird.

Wenn die Achse am Fußpunkt eines Abzweigstutzens derart angeordnet ist, dass ein Regelklappenbereich zumindest in der Öffnungsstellung der Regelklappe in ein Sammel- oder Verteilerrohr ragt, während der zweite Regelklappenbereich in einer von dem Sammel- oder Verteilerrohr abzweigenden Leitung angeordnet ist, verfügt die Regelklappe über einen besonders geringen Strömungswiderstand und - in Folge - eine besonders geringe Geräuschentwicklung. Dies gilt sowohl für die geöffnete Stellung der Regelklappe als auch für beliebige Zwischenpositionen oder die geschlossene Stellung der Regelklappe.

Die Regelklappe kann nicht nur in einem Abzweigstutzen mit einem Sammel- oder Verteilerrohr und einer hiervon abzweigenden Leitung angeordnet werden, sondern bspw. auch in einem Winkelstück eines Rohres. Hierbei ist die Achse am Fußpunkt des Winkelstücks angeordnet, so dass ein Regelklappenbereich zumindest in der Öffnungsstellung der Regelklappe in einen ersten Rohrbereich ragt, während der zweite Regelklappenbereich in einem davon abknickenden Rohrbereich angeordnet ist. Auf diese Weise wird in der Öffnungsstellung der Regelklappe eine Luftströmung zusätzlich durch die als eine Leitschaufel wirkende Regelklappe umgelenkt.

Es wird bevorzugt, wenn die beiden Regelklappenbereiche eine unterschiedliche Länge aufweisen. Die der Achse abgewandten Enden der Regelklappenbereiche können dabei mit einer Rundung versehen sein, die an die Rohr- oder Leitungsstücke, in denen die Regelklappe aufgenommen ist, angepasst ist.

Wenn im geschlossenen Zustand der Regelklappe ein erster Regelklappenbereich im Wesentlichen mit der Wandung eines Sammel- oder Verteilerrohres bzw. eines ersten Rohrbereichs eines Winkelstücks fluchtend ausgerichtet ist, während der zweite Regelklappenbereich im geschlossenen Zustand der Regelklappe anliegend an die Wandung einer von dem Sammel- oder Verteilerrohr abzweigenden Leitung bzw. eines von dem ersten Rohrbereich abknickenden zweiten Rohrbereich ausgerichtet ist, kann eine zuverlässige Absperrung einer Strömungsverbindung durch die Regelklappe sichergestellt werden. Die Achse der Regelklappe kann hierbei mittig in der von dem Sammel- oder Verteilerrohr abzweigenden Leitung bzw. einem Rohrbereich eines Winkelstücks angeordnet sein. Dadurch sind die auf die beiden Regelklappenbereiche wirkenden Druckkräfte gleich groß, so dass keine großen Haltekräfte erforderlich sind, um die Regelklappe in ihrer geschlossenen Position zu halten.

Im geöffneten Zustand der Regelklappe ragt vorzugsweise ein erster der beiden Regelklappenbereiche in ein Sammel- oder Verteilerrohr bzw. einen ersten Rohrbereich eines Winkelstücks hinein, während der zweite Regelklappenbereich in diesem geöffneten Zustand im Wesentlichen parallel zu der Achse einer von dem Sammel- oder Verteilerrohr abzweigenden Leitung bzw. eines von dem ersten Rohrbereich abknickenden zweiten Rohrbereichs ausgerichtet ist. Der zweite Regelklappenbereich ist dadurch so ausgerichtet, dass der durch diesen Regelklappenbereich erzeugte Strömungswiderstand minimal ist. Der erste Regelklappenbereich sorgt dagegen für eine gewünschte Umlenkung der Strömung, ohne dass es hierbei zu Verwirbelungen kommt, die störende Geräusche erzeugen können. Die beiden zueinander abgewinkelten Regelklappenbereiche wirken somit als eine Leitschaufel, die die Strömungsführung optimiert.

Nach einer bevorzugten Ausführungsform der Erfindung ist es vorgesehen, dass der zweite Regelklappenbereich im geöffneten Zustand der Regelklappe näherungsweise mittig in der abzweigenden Leitung bzw. in dem abknickenden zweiten Rohrbereich eines Winkelstücks ausgerichtet ist. Die Strömung wird dadurch in zwei etwa gleich große Teilströmungen unterteilt, die durch die Regelklappe im geöffneten Zustand umgelenkt und durch eine Verschwenkung der beiden Regelklappenbereiche um die Achse stufenlos gedrosselt werden können. Die Regelklappe ist dadurch insbesondere für den Einsatz in einem Luftführungssystem für Gebäude geeignet, bei welchem ein mit einer Luftabsaugung verbundenes Sammelrohr einen oder mehrere zentral angeordnete Abzweigstutzen aufweist, die jeweils mit einer derartigen Regelklappe versehen sind, um die Zu- oder Abfuhr von Luft aus entsprechenden Leitungen steuern zu können.

Weitere Ziele, Vorteile und Anwendungsmöglichkeiten der vorliegenden Erfindung ergeben sich aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen schematisch:
- Fig. 1a und 1b: eine Schnittansicht eines Abzweigstutzens ohne Regelklappe,
- Fig. 2: eine Schnittansicht eines Abzweigstutzens mit geöffneter Regelklappe,
- Fig. 3: eine Schnittansicht eines Abzweigstutzens mit geschlossener Regelklappe,
- Fig. 4: einen Schnitt durch den Abzweigstutzen nach Fig. 2 entlang der Linien IV-IV,
- Fig. 5: einen Schnitt durch den Abzweigstutzen nach Fig. 2 entlang der Linien V-V und
- Fig. 6: in Perspektivansicht einen Abzweigstutzen mit geschlossener Regelklappe.

In den Figuren ist durch ein Rohr 1 und eine davon abzweigende Leitung 2 ein Abzweigstutzen 3 gebildet. Das Rohr 1 kann dabei ein Sammel- oder Verteilerrohr sein, von welchem mehrere (nicht dargestellte) Leitungen abzweigen. Alternativ ist es auch möglich, dass eine Seite des Rohres 1 verschlossen ist, so dass das Rohr 1 zusammen mit der Leitung 2 ein Winkelstück bildet.

Der Abzweigstutzen 3 ist in den Fig. 1 a und 1b ohne Regelelemente oder dgl. Ventile ausgebildet, dargestellt. Eine durch den Pfeil S angedeutete Strömung in dem Rohr 1 erzeugt eine Nebenströmung N aus der Leitung 2 in das Rohr 1. Dadurch bildet sich stromabwärts der Leitung 2 in dem Rohr 1 eine Verwirbelung V, die zu einer Erhöhung des Strömungswiderstandes sowie zu störenden Geräuschen führen kann.

Umgekehrt erzeugt eine in entgegengesetzte Richtung wirkende Strömung S, die in Fig. 1 b angedeutet ist, eine Nebenströmung N aus dem Rohr 1 in die Leitung 2, wodurch in der Leitung 2 eine Verwirbelung V hervorgerufen werden kann.

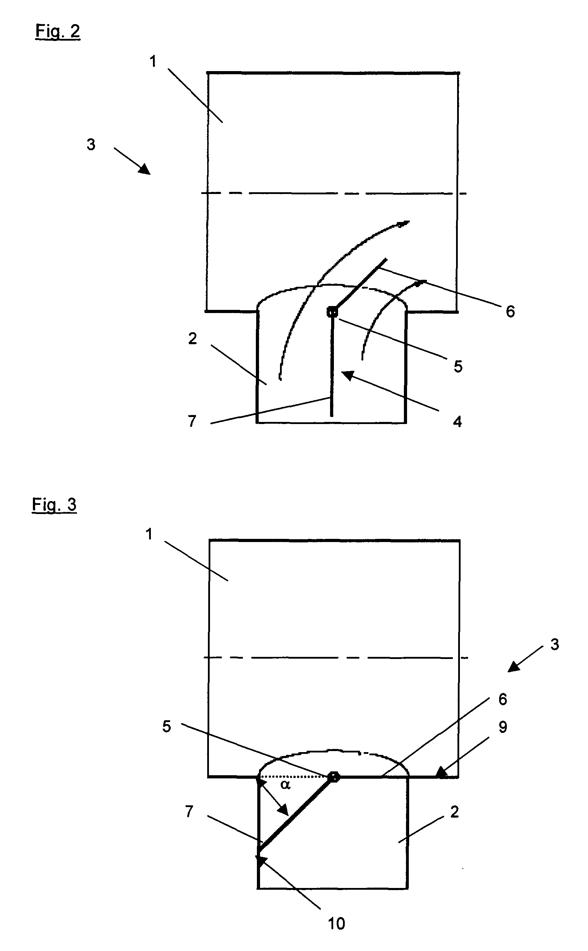

In den Fig. 2 bis 6 ist in dem Abzweigstutzen 3 eine Regelklappe 4 vorgesehen, welche an einer Achse 5 schwenkbar gelagert ist. Die Regelklappe 4 weist dabei einen ersten Klappenbereich 6 auf, der in der in Fig. 2 gezeigten geöffneten Stellung in das Sammel- oder Verteilerrohr 1 ragt. Der erste Regelklappenbereich 6 ist starr mit einem zweiten Regelklappenbereich 7 verbunden, der in der Leitung 2 positioniert ist.

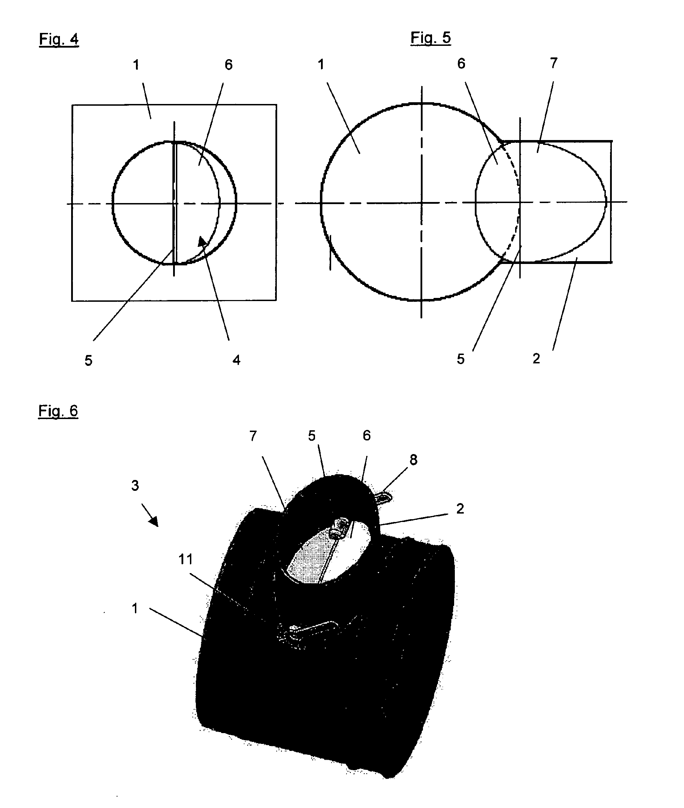

Wie aus den Fig. 2 und 3 ersichtlich ist, sind der erste und der zweite Klappenbereich 6 bzw. 7 in Ebenen angeordnet, die sich zueinander unter einem Winkel α von etwa 45° erstrecken. Über einen in Fig. 6 gezeigten Hebel 8 kann die Regelklappe 4 um die Achse 5 zwischen ihrer in Fig. 2 dargestellten geöffneten Position und der in Fig. 3 gezeigten geschlossenen Stellung verschwenkt werden.

Die Achse 5 der Regelklappe 4 ist dabei derart im Fußpunkt des Abzweigstutzens 3 angeordnet, dass in der in Fig. 3 gezeigten geschlossenen Stellung der Regelklappe 4 der erste Klappenbereich 6 im Wesentlichen fluchtend mit der Wandung 9 des Rohres 1 ausgerichtet ist. Gleichzeitig liegt der zweite Klappenbereich 7 an der Wandung 10 der Leitung 2 an, so dass die Leitung 2 gegenüber dem Sammel- oder Verteilerrohr 1 abgedichtet ist. Hierzu ist, wie in den Fig. 4 und 5 dargestellt, sowohl der erste Klappenbereich 6 als auch der zweite Klappenbereich 7 an dem der Achse 5 abgewandten Ende mit einer Rundung versehen. Zudem ist der zweite Klappenbereich 7 länger als der erste Klappenbereich 6 ausgebildet.

Da die Achse 5 der Regelklappe 4 in der gezeigten Ausführungsform mittig in der Leitung 2 positioniert ist, ist bei geschlossener Regelklappe 4 der auf die beiden Klappenbereiche wirkende Druck in Richtung der Leitung 2 gleich groß, so dass keine Haltekräfte erforderlich sind, um die Regelklappe 4 in ihrer in Fig. 3 gezeigten Stellung zu halten. Es ist daher ausreichend, an dem Hebel 8, wie in Fig. 6 gezeigt, Rastelemente 11 vorzusehen, so dass die Regelklappe 4 in einer definierten Position fixierbar ist.

In der geöffneten Position der Regelklappe 4 erstreckt sich der zweite Klappenbereich 7 näherungsweise parallel zu der Achse der Leitung 2, während der erste Klappenbereich 6 unter einem Winkel von etwa 45° in das Sammel- oder Verteilerrohr 1 hineinragt. Hierdurch wird eine Strömung aus der Leitung 2 in das Sammel- oder Verteilerrohr 1 bzw. umgekehrt durch die Regelklappe 4 derart umgelenkt, dass weder in dem Sammel- oder Verteilerrohr 1 noch in der Leitung 2 nennenswerte Verwirbelungen entstehen.

Entgegen der Darstellung von Fig. 2 kann der zweite Klappenbereich 7 in der geöffneten Stellung der Regelklappe 4 auch gegenüber der Achse der Leitung 2 um etwa 5° bis 15° geneigt sein. Weiter ist es auch möglich, dass die Achse 5 nicht mittig in der Leitung 2 angeordnet ist, sondern um einen definierten Betrag gegenüber der Längsachse der Leitung 2 versetzt ist.

### Bezugszeichenliste:

- 1: Sammel- oder Verteilerrohr
- 2: Leitung
- 3: Abzweigstutzen
- 4: Regelklappe
- 5: Achse
- 6: erster Klappenbereich
- 7: zweiter Klappenbereich
- 8: Hebel
- 9: Wandung des Rohres 1
- 10: Wandung der Leitung 2
- 11: Rastelemente

- S: Strömung
- N: Nebenstrom
- V: Verwirbelung

- α: Winkel zwischen den Klappenbereichen

## Patentansprüche

1. Regelklappe zur Steuerung der Durchflussmenge eines insbesondere gasförmigen Mediums durch ein Rohr (1), insbesondere für ein Luftführungssystem zur Zu- und/oder Abfuhr von Luft aus einem Gebäude, mit einer Achse (5), an der zwei starr miteinander verbundene Regelklappenbereiche (6, 7) schwenkbar gelagert sind, **dadurch gekennzeichnet, dass** die Regelklappenbereiche (6, 7) sich in zueinander unter einem spitzen Winkel (α) verlaufenden Ebenen erstrecken.

2. Regelklappe nach Anspruch 1, **dadurch gekennzeichnet, dass** sich die Ebenen der Regelklappenbereiche (6, 7) zueinander unter einem Winkel (α) von 15° bis 75°, insbesondere von etwa 45° erstrecken.

3. Regelklappe nach Anspruch 1 oder 2, **dadurch gekennzeichnet, dass** die Achse (5) am Fußpunkt eines Abzweigstutzens (3) derart angeordnet ist, dass ein Regelklappenbereich (6) zumindest in der Öffnungsstellung der Regelklappe (4) in ein Sammel- oder Verteilerrohr (1) ragt, während der zweite Regelklappenbereich (7) in einer von dem Sammel- oder Verteilerrohr (1) abzweigenden Leitung (2) angeordnet ist.

4. Regelklappe nach Anspruch 1 oder 2, **dadurch gekennzeichnet, dass** die Achse (5) am Fußpunkt eines Winkelstücks derart angeordnet ist, dass ein Regelklappenbereich (6) zumindest in der Öffnungsstellung der Regelklappe in einen Rohrbereich ragt, während der zweite Regelklappenbereich (7) in einem davon abknickenden Rohrbereich angeordnet ist.

5. Regelklappe nach einem der Ansprüche 1 bis 4, **dadurch gekennzeichnet, dass** die beiden Regelklappenbereiche (6, 7) eine unterschiedliche Länge aufweisen.

6. Regelklappe nach einem der Ansprüche 1 bis 5, **dadurch gekennzeichnet, dass** ein erster der beiden Regelklappenbereiche (6) im geschlossenen Zustand der Regelklappe (4) im Wesentlichen mit der Wandung (9) eines Sammel- oder Verteilerrohres (1) bzw. eines ersten Rohrbereiches fluchtend ausgerichtet ist, während der zweite Regelklappenbereich (7) im geschlossenen Zustand der Regelklappe (4) anliegend an die Wandung (10) einer von dem Sammel- oder Verteilerrohr (1) abzweigenden Leitung (2) bzw. eines von dem ersten Rohrbereich abknickenden zweiten Rohrbereichs ausgerichtet ist.

7. Regelklappe nach einem der Ansprüche 1 bis 6, **dadurch gekennzeichnet, dass** ein erster der beiden Regelklappenbereiche (6) im geöffneten Zustand der Regelklappe (4) in ein Sammel- oder Verteilerrohr (1) bzw. einen ersten Rohrbereich hineinragend ausgerichtet ist, während der zweite Regelklappenbereich (7) im geöffneten Zustand der Regelklappe (4) im Wesentlichen parallel zu der Achse einer von dem Sammel- oder Verteilerrohr (1) abzweigenden Leitung (2) bzw. eines von dem ersten Rohrbereich abknickenden zweiten Rohrbereichs ausgerichtet ist.

8. Regelklappe nach Anspruch 7, **dadurch gekennzeichnet, dass** der zweite Regelklappenbereich (7) im geöffneten Zustand der Regelklappe (4) im Wesentlichen mittig in der abzweigenden Leitung (2) bzw. in dem abknickenden zweiten Rohrbereich ausgerichtet ist.
